# EUROPEAN PATENT APPLICATION

(11) **EP 4 748 961 A1**
(43) Date of publication of application: **27.05.2026**
(21) Application number: 24842415.2
(22) Date of filing: 18.07.2024
(51) Int. Cl.: C22C 38/02, C21D 8/12

(54) **NON-ORIENTED ELECTRICAL STEEL SHEET HAVING HIGH FREQUENCY, LOW IRON LOSS AND EXCELLENT FATIGUE PERFORMANCE, AND MANUFACTURING METHOD THEREFOR**

(30) Priority: 18.07.2023 CN 202310881254
(71) Applicant: BAOSHAN IRON & STEEL CO., LTD., Shanghai 201900 (CN)
(72) Inventor: FANG, Xianshi, Shanghai 201900 (CN); ZHANG, Feng, Shanghai 201900 (CN); WANG, Bo, Shanghai 201900 (CN); HAO, Yunwei, Shanghai 201900 (CN)
(74) Representative: Tergau & Walkenhorst Intellectual Property GmbH
(86) International application number: PCT/CN2024/106142
(87) International publication number: WO 2025/016427

(57) **Abstract**

The present disclosure relates to a non-oriented electrical steel sheet with low iron loss at high frequencies and excellent fatigue performance. In addition to Fe and inevitable impurities, the non-oriented electrical steel sheet further comprises the following chemical elements in mass percentage: 0<C ≤ 0.0045%, Si: 2.65-3.75%, Mn: 0.10-1.04%, Al: 0.10-1.85%. The number of Al₂O₃ inclusions with a size of 2.0 µm or more in the non-oriented electrical steel sheet is not more than 4 counts/mm². In addition, the present disclosure further relates to a method for manufacturing the non-oriented electrical steel sheet. The non-oriented electrical steel sheet has the advantage of low iron loss at high frequencies, so that motor energy loss can be reduced and motor efficiency can be improved. Also, the non-oriented electrical steel sheet has excellent fatigue performance, enabling the motor core and rotor to operate stably at high speeds within a temperature range from room temperature to 150 °C, without deformation or fracture.

## Description

### TECHNICAL FIELD

The present disclosure relates to a steel sheet and a manufacturing method therefor, in particular to a non-oriented electrical steel sheet and a manufacturing method therefor.

### BACKGROUND

With the rapid development of the new energy vehicle market, there are increasingly higher requirements for the energy saving and environmental protection of various types of motors. Particularly for high-speed motors and new energy vehicle drive motors, the trend is continuously towards higher efficiency, miniaturization, and lower loss.

Non-oriented silicon steel is an excellent soft magnetic material widely used in various motor cores such as generators, drive motors, compressors, micro-special motors, industrial motors, etc.

For non-oriented silicon steel materials, it is desirable that the material loss be as low as possible, especially at medium and high frequencies. Meanwhile, excellent fatigue performance is also desired to ensure that weak areas such as magnetic bridges in motor rotors do not undergo aging deformation or even risk of fracture during repeated start-stop cycles and high-speed operation.

In this regard, the Chinese patent literature CN105331879A published on February 17, 2016, titled "*a non-oriented silicon steel for high-power-density motor and manufacturing method*", discloses a non-oriented silicon steel, comprising: Si: 3.25-3.45%, Mn: 0.05-0.10%, Sn: 0.04-0.06%, without the addition of Al alloy. The method for manufacturing the non-oriented silicon steel includes: smelting according to low-Al clean steel and continuous casting into slab, slab heating, hot rolling, normalizing, single cold rolling, and final annealing. The non-oriented silicon steel has an iron loss P_{1.0/400} of ≤17.0 W/kg, and a fatigue limit strength at room temperature of ≥400 MPa.

### SUMMARY

One of the objectives of the present disclosure is to provide a non-oriented electrical steel sheet with low iron loss at high frequencies and excellent fatigue performance. The non-oriented electrical steel sheet exhibits the advantage of low iron loss at high frequencies, thereby lowering motor energy loss and improving motor efficiency. Meanwhile, the non-oriented electrical steel sheet also exhibits excellent high-temperature fatigue performance, enabling the motor core and rotor to operate stably at high speeds within the temperature range from room temperature to 150 °C (rated operating environment temperature) without deformation or fracture.

In order to achieve the above objective, the present disclosure provides a non-oriented electrical steel sheet, wherein in addition to Fe and inevitable impurities, the non-oriented electrical steel sheet further comprises the following chemical elements in mass percentage: 0<C≤0.0045%, Si: 2.65-3.75%, Mn: 0.10-1.04%, Al: 0.10-1.85%;
wherein the number of Al₂O₃ inclusions with a size of 2.0 µm or more in the non-oriented electrical steel sheet is not more than 4 counts/mm².

Preferably, the non-oriented electrical steel sheet according to the present disclosure comprises the following chemical elements in mass percentage:
0<C≤0.0045%, Si: 2.65-3.75%, Mn: 0.10-1.04%, Al: 0.10-1.85%; the balance being Fe and inevitable impurities.

Preferably, the non-oriented electrical steel sheet according to the present disclosure further comprises Ca and/or REM, wherein in mass percentage, Ca: 0.0005-0.0060%, and/or REM: 0.0005-0.0120%.

Preferably, the non-oriented electrical steel sheet according to the present disclosure further comprises at least one of Nb, V, Cu, Mo, Ni, Co, Cr, Sn, Sb and Zr in a total amount of 0.0095-1.05% by mass.

Preferably, the non-oriented electrical steel sheet according to the present disclosure further comprises Sn, wherein in mass percentage, Sn: 0.0035-0.25%.

Preferably, in the non-oriented electrical steel sheet according to the present disclosure, the inevitable impurities include P, S, N and Ti, wherein in mass percentage, P≤0.02%, S≤0.0055%, N≤0.0035%, and Ti≤0.0025%.

Preferably, the non-oriented electrical steel sheet according to the present disclosure has a thickness of 0.15-0.35 mm.

Preferably, the non-oriented electrical steel sheet according to the present disclosure has an average grain size of 45-165 µm.

Preferably, the non-oriented electrical steel sheet according to the present disclosure has an iron loss P_{1.0/600} of ≤ 36-([Si]+1.2×[Al])/5t, where t represents the thickness of the steel sheet in mm, and [Si] and [Al] are substituted with the numerical values preceding the % symbol of the mass percentage of Si and Al in the steel sheet, respectively.

Preferably, the non-oriented electrical steel sheet according to the present disclosure has a fatigue strength S₂₅ at 25 °C of ≥ 365 MPa, and a fatigue strength S₁₅₀ at 150 °C of ≥ 294 MPa, preferably S₁₅₀ ≥ 330 MPa.

Preferably, in the non-oriented electrical steel sheet according to the present disclosure, the ratio of the fatigue strength S₂₅ at 25 °C to the fatigue strength S₁₅₀ at 150 °C (i.e., S₁₅₀/S₂₅) satisfies 0.80 ≤ S₁₅₀/S₂₅ ≤ 1.0.

The non-oriented electrical steel sheet according to the present disclosure achieves excellent iron loss P_{1.0/600} performance (low iron loss at high frequencies) through optimized chemical composition design combined with the control of inclusions and its grain size, thereby reducing the energy loss in high-speed drive motors, improving motor efficiency, and enabling significant power savings, as well as facilitating the miniaturization of motor designs and leading to material savings.

The present disclosure further provides a method for manufacturing the non-oriented electrical steel sheet, comprising the following steps performed in sequence: smelting, RH refining, casting, hot rolling, normalizing annealing, cold rolling, final annealing, and applying insulation coating, wherein in the RH refining step: a circulating gas flow rate V₁ during decarburization and a circulating gas flow rate V₀ at the end of decarburization satisfy the following relationships: V₁ ≥ V₀+12[Al], where [Al] represents the Al content in molten steel (substituted with the numerical value preceding the % symbol of the mass percentage of element Al in the molten steel), and V₀ ≥ 140 Nm³/h; and after decarbonization, the ratio of free oxygen content [O] to carbon content [C], [O]/[C], in the molten steel is set to 21.5 or less.

In the method according to the present disclosure, the heating temperature and finishing rolling temperature in the hot rolling step are not particularly limited, and temperatures conventionally used in the art may be employed. In one embodiment, the slab heating temperature is 1180 °C, and the finishing rolling temperature of the steel coil is 780 °C. In one embodiment, the coiling temperature is 660 °C. In one embodiment, the thickness of the hot-rolled plate is 2.5 mm.

In the method according to the present disclosure, the holding temperature and holding time in the normalizing annealing step are not particularly limited, and temperatures and durations conventionally used in the art may be employed. In one embodiment, the holding temperature for normalizing annealing is 980 °C, with a holding time of 10 minutes.

In the method according to the present disclosure, cold rolling may be carried out by either a single cold rolling process or a double cold rolling process.

In the method according to the present disclosure, the annealing temperature and holding time in the final annealing step are not particularly limited, and temperatures and durations conventionally used in the art may be employed. In one embodiment, the holding time of the final annealing is 50 seconds. In one embodiment, the annealing temperature of the final annealing is in the range of 830-990 °C.

### DETAILED DESCRIPTION

Unless otherwise defined, all technical and scientific terms used herein have the same meanings as those commonly understood by those skilled in the art to which the present disclosure relates.

As used herein, the term "and/or" refers to and encompasses any and all possible combinations of one or more of the listed items.

Herein, the number of Al₂O₃ inclusions is statistically analyzed with a field emission scanning electron microscopy. Photographing and observation are conducted under backscattered electron mode, with over 20 consecutive fields of view captured. The number of Al₂O₃ oxide particles with a size of 2.0 µm or more in the fields of view is counted, and the distribution density is calculated in units of "counts/mm²".

Herein, the average grain size is determined using the planimetric method in accordance with the national standard GBT6394-2017 "*Determination of estimating the average grain size of metals*"*.*

Herein, the iron loss P_{1.0/600} (the iron loss value when excited with a magnetic flux density of 1.0 T and a frequency of 600 Hz) is determined using the square ring method in accordance with the standard GB/T10129-2019 "*Methods of measurement of magnetic properties of electrical steel strip and sheet at medium frequencies*".

Herein, the fatigue strength S₂₅ and fatigue strength S₁₅₀ are determined according to the GB-T 3075-2008 "*Metallic materials - Fatigue testing - Axial-force-controlled method*", at testing ambient temperatures of 25±5 °C and 150±3 °C, respectively. The fatigue limit (fatigue strength) is calculated based on a survival rate of 50%.

The non-oriented electrical steel sheet according to the present disclosure comprises Al element. In the manufacturing process of the non-oriented electrical steel sheet according to the present disclosure, aluminum particles or ingots are added to the ladle for deoxidation treatment during the RH refining process. Aluminum rapidly reacts with free oxygen in the molten steel to form Al₂O₃ oxides, which have a high melting point and is in the form of hard particles. When such inclusions aggregate and grow to a certain size and are not removed by floating out, they remain in the finished steel sheet, hindering the magnetic domain movement during the magnetization process of the material, deteriorating the iron loss performance of the steel sheet, and posing a great threat to the fatigue performance of the material. Moreover, as the size and number of inclusions increase, stress concentration becomes more likely to occur around large Al₂O₃ inclusions under cyclic alternating stress, leading to microcracks and further degradation of fatigue performance. The present inventors have found that when the number of Al₂O₃ inclusions with a size of 2.0 µm or more in the non-oriented electrical steel sheet is not more than 4 counts/mm², the non-oriented electrical steel sheets exhibit good iron loss and fatigue performances.

The design principles of each chemical element in the non-oriented electrical steel sheet according to the present disclosure are as follows:
C: In the non-oriented electrical steel sheet according to the present disclosure, carbon is a detrimental impurity element that combines with other alloying elements to form carbide precipitates, deteriorating iron loss performance. However, since C is inevitable residual element in steel materials, its content cannot be zero. The present disclosure aims to control its upper limit and expects its content to be as low as possible. Therefore, in the non-oriented electrical steel sheet according to the present disclosure, the content of C element is controlled to 0.0045% or less by mass. In some preferred embodiments, the content of C element may be controlled to 0.0030% or less by mass.
Si: In the non-oriented electrical steel sheet according to the present disclosure, Si element can significantly increase the electrical resistivity of the steel sheet, reduce the iron loss of material, and also improve the high-temperature fatigue strength of the steel sheet. In order to achieve the required fatigue strength S₁₅₀ of no less than 294 MPa at 150°C along with low iron loss, the silicon content needs to be 2.65% or more. However, the Si content should not be too high, otherwise the difficulty of cold rolling processing of the material will greatly increase, making it difficult to achieve stable mass production. Therefore, in the non-oriented electrical steel sheet according to the present disclosure, the content of Si element is controlled to 2.65-3.75% by mass, preferably 2.90-3.45% by mass.
Mn: In the non-oriented electrical steel sheet according to the present disclosure, Mn element is an element that increases the electrical resistivity of the material. Meanwhile, Mn can combine with the S element in steel to form MnS, thereby improving the morphology of precipitates in steel. Therefore, it is necessary to add 0.10% or more of Mn element. However, when the amount of Mn added exceeds 1.04%, the hardness of the strip increases, which is not conducive to cold rolling processing. Therefore, in the non-oriented electrical steel sheet according to the present disclosure, the content of Mn element is controlled to 0.10-1.04% by mass, preferably 0.55-1.00% by mass.
Al: In the non-oriented electrical steel sheet according to the present disclosure, Al element can increase electrical resistivity and reduce iron loss of material. To achieve the inventive effect, 0.10% or more of Al element may be added. However, when the amount of Al added exceeds 1.85%, the production difficulty increases, and a large amount of aluminum oxide is generated during the steelmaking process, which not only deteriorates the performance of the finished product, but also tends to causes nozzle clogging during casting, affecting production.

Therefore, in the non-oriented electrical steel sheet according to the present disclosure, the content of Al element is controlled to 0.10-1.85% by mass, preferably 0.55-1.5% by mass.

In order to further improve the performance of the non-oriented electrical steel sheet according to the present disclosure, it is also preferred to add an appropriate amount of Ca element and rare earth elements (REM) to the steel.

Ca: In the non-oriented electrical steel sheet according to the present disclosure, Ca element can react with S and O in the steel to form structurally stable CaS and CaO, improving the morphology and distribution of inclusions in the molten steel, reducing the formation of small inclusions, and facilitating the reduction of iron loss. However, when the Ca content is too high, it can lead to the formation of excessive oxide inclusions, affecting the surface quality of the steel sheet. Therefore, in the non-oriented electrical steel sheet according to the present disclosure, the content of Ca element may be controlled to 0.0005-0.0060% by mass.

REM: In the non-oriented electrical steel sheet according to the present disclosure, rare earth elements are tend to combine with harmful elements such as sulfur and oxygen. By adding a suitable amount of rare earth elements, it allows to purify the molten steel, promote the growth of small inclusions, and improve the recrystallized grain structure of the finished steel sheet. However, when the REM content is too high, it can cause steel surface defects and deterioration of magnetic properties on the steel sheet. Therefore, in the non-oriented electrical steel sheet according to the present disclosure, the content of REM is controlled to 0.0005-0.0120% by mass. In some preferred embodiments, the content of REM is controlled to 0.0008-0.0120% by mass.

In order to further improve the performance of the non-oriented electrical steel sheet according to the present disclosure, the steel may preferably comprise at least one of Nb, V, Cu, Mo, Ni, Co, Cr, Sn, Sb and Zr in a total amount of 0.0095-1.05% by mass percentage.

The present inventors have found that when the non-oriented electrical steel sheet according to the present disclosure comprises Sn element in an amount of 0.0035-0.25%, the performance of the non-oriented electrical steel sheet according to the present disclosure can be further improved.

Sn: In the non-oriented electrical steel sheet according to the present disclosure, Sn element can segregate at grain boundaries, suppress oxidation within the steel sheet, and facilitate the development of favorable textures in the final annealed microstructure. However, excessive addition of Sn may lead to an increase in surface defects on the steel. Therefore, in the non-oriented electrical steel sheet according to the present disclosure, the content of Sn element may be controlled to 0.0035-0.25% by mass. In some preferred embodiments, the content of Sn element may be controlled to 0.0065-0.25% by mass.

In addition to Sn element, one or more elements selected from Nb, V, Cu, Mo, Ni, Co, Cr, Sb and Zr may be further added. Among these elements, Nb, V, and Zr may be dissolved in solid solution into the matrix to enhance material strength. Cu, Mo, Ni, Co, Cr elements increase the electrical resistivity of material, reduce loss, and also play a certain role in solid solution strengthening. Sb element segregates at grain boundaries, inhibiting oxidation within the steel sheet and facilitating the development of favorable textures in the final annealed microstructure. In some embodiments, one or more of the above elements may be added in a total amount of 0.0095-1.0500%.

In the non-oriented electrical steel sheet according to the present disclosure, elements P, S, N and Ti are all impurity elements in the non-oriented electrical steel sheet. Within the limits permitted by process conditions, the contents of impurity elements in the steel should be reduced as much as possible in order to obtain a steel with superior performance and higher quality.

P: In the non-oriented electrical steel sheet according to the present disclosure, P element tends to segregate at grain boundaries, increasing material brittleness. Therefore, in the non-oriented electrical steel sheet according to the present disclosure, the content of P element may be controlled to 0.02% or less by mass. In some preferred embodiments, the content of P element may be controlled to 0.015% or less by mass.

S: In the non-oriented electrical steel sheet according to the present disclosure, S element is a detrimental impurity element that combines with Mn element to form sulfides, hindering grain growth and leading to significant deterioration of iron loss performance of steel sheet. Therefore, in the non-oriented electrical steel sheet according to the present disclosure, the content of S element may be controlled to 0.0055% or less by mass. In some preferred embodiments, the content of S element may be controlled to 0.0040% or less by mass.

N: In the non-oriented electrical steel sheet according to the present disclosure, when the N element content is too high, it will combine with various elements in the steel to form a large number of fine nitrides, hindering grain growth and deteriorating magnetic properties. Therefore, in the non-oriented electrical steel sheet according to the present disclosure, the content of N element may be controlled to 0.0035% or less by mass. In some preferred embodiments, the content of N element may be controlled to 0.0030% or less by mass.

Ti: In the non-oriented electrical steel sheet according to the present disclosure, Ti is a detrimental impurity element for non-oriented silicon steel. Ti reacts with carbon and nitrogen to precipitate titanium carbides and titanium nitrides, which pin grain boundaries and hinder grain growth during recrystallization, leading to deterioration of iron loss performance. Therefore, in the non-oriented electrical steel sheet according to the present disclosure, the content of Ti element may be controlled to 0.0025% or less by mass. In some preferred embodiments, the content of Ti element may be controlled to 0.0020% or less by mass.

In the non-oriented electrical steel sheet according to the present disclosure, when the grain size is too small, although the material exhibits higher tensile strength and fatigue strength, high-frequency iron loss performance is severely deteriorate. When the grain size is too large, the material strength decreases and the magnetic domain size increases, resulting in increased eddy current loss in the material. Therefore, in the non-oriented electrical steel sheet according to the present disclosure, the average grain size of the steel is controlled to 45-165 µm, preferably 65-135 µm.

When the non-oriented electrical steel sheet according to the present disclosure has a fatigue strength S₂₅ at 25 °C (ambient temperature) of ≥ 365 MPa and a fatigue strength S₁₅₀ at 150 °C of ≥ 294 MPa, better fatigue performance can be achieved. The high-speed motor rotor iron core made of the non-oriented electrical steel sheet ensures long-term operational stability in the temperature range of room temperature to 150 °C, without sudden failure, deformation or fracture.

The present disclosure further provides a method for manufacturing the non-oriented electrical steel sheet according to the present disclosure, comprising the following steps: smelting, RH refining, casting, hot rolling, normalizing annealing, cold rolling, final annealing (continuous annealing), and applying insulation coating, wherein in the RH refining step: a circulating gas flow rate V₁ during decarburization and a circulating gas flow rate V₀ at the end of decarburization satisfy the following relationships: V₁ ≥ V₀+12[Al], where [Al] represents the Al content in molten steel (substituted with the numerical value preceding the % symbol of the mass percentage of element Al in the molten steel), and V₀ ≥ 140 Nm³/h; and after decarbonization, the ratio of free oxygen content [O] to carbon content [C], [O]/[C], in the molten steel is set to 21.5 or less, preferably 18.6 or less.

The method according to the present disclosure controls the quantity of harmful, large-sized Al₂O₃ inclusions in steel through the regulation of process parameters. In the RH refining decarburization process, oxygen is blown into the vacuum chamber with a KTB oxygen gun to react with CO gas and molten steel. During this process, it is necessary to strictly control the decarburization reaction based on the ratio of free oxygen to carbon content in the molten steel, ensuring that the blown-in oxygen is used for decarburization and preventing an increase in the free oxygen in the molten steel, thereby controlling the oxygen content in the molten steel to remain within an appropriate range at the end of decarburization. Otherwise, subsequent aluminum deoxidation becomes difficult and a large amount of Al₂O₃ oxide inclusions may form. After decarburization is completed in the RH refining process, the ratio of the free oxygen content [O] in the molten steel to the carbon content [C] in the molten steel is controlled to satisfy the relationship: [O]/[C] ≤ 21.5.

In addition, the present disclosure further achieves the removal of large-sized inclusions by reasonably controlling the circulating gas flow rate in the RH refining process. The key is to ensure that the circulating gas flow rate V₀ at the end of decarbonization is ≥ 140 Nm³/h, and after adding aluminum particles or ingots, the circulating gas flow rate V₁ during decarbonization and the circulating gas flow rate V₀ at the end of decarbonization satisfies the following relationship: V₁ ≥ V₀+12 [Al], where [Al] represents the total Al content in the molten steel (i.e., substituted with the numerical value preceding the % symbol of mass percentage of element Al in the steel). The present disclosure utilizes differential control of circulating gas flow rate at different stages of the RH refining process to enable Al₂O₃ inclusions to flow with the molten steel and rapidly float up for removal, thereby achieving the result that the number of Al₂O₃ inclusions with a size of 2.0 µm or more in the steel sheet is not more than 4 counts/mm².

The non-oriented electrical steel sheet according to the present disclosure and manufacturing method therefor offer the following advantages and beneficial effects:
The non-oriented electrical steel sheet according to the present disclosure exhibits excellent fatigue performance, which can ensure the long-term stable operation of the high-speed motor rotor core made of the non-oriented electrical steel sheet according to the present disclosure in the operating temperature range of room temperature to 150 °C, without sudden failure, deformation or fracture.

Through reasonable chemical composition design and process control, especially the control of inclusions and grain size, the non-oriented electrical steel sheet according to the present disclosure achieves excellent iron loss performance P_{1.0/600}, thereby reducing high-frequency iron loss of non-oriented silicon steel. This facilitates the reduction of energy loss of high-speed drive motor, which can improve work efficiency of motor and save significant electrical energy. In addition, it is also conducive to miniaturization of motor design and material saving.

The following will provide further explanation and illustration of the non-oriented electrical steel sheet according to the present disclosure and manufacturing method therefor through specific embodiments. However, this explanation and illustration shall not be construed as unduly limiting the technical solution of the present disclosure.

### Examples 1-8 and Comparative Examples 1-5

The non-oriented electrical steel sheets of Examples 1-8 and Comparative Examples 1-5 were prepared by the following steps:
(1) Blast furnace molten iron was subjected to molten iron pretreatment and converter smelting.
(2) Decarbonization, deoxidation and alloying treatment were carried out via RH refining. In the RH refining step: after the addition of aluminum, the circulating gas flow rate V₁ during decarburization and the circulating gas flow rate V₀ at the end of decarburization was controlled to satisfy the following relationships: V₁ ≥ V₀+12[Al], where [Al] represents the Al content in molten steel, and V₀ ≥ 140 Nm³/h; and after decarbonization, the ratio of the free oxygen content [O] to the carbon content [C], [O]/[C], in the molten steel was set to 21.5 or less. The specific process parameters for Examples and Comparative Examples in this step are listed in Table 2.
(3) After the completion of refining, the molten steel was subjected to continuous casting to obtain continuous cast slabs. The chemical compositions of continuous cast slabs for Examples and Comparative Examples are indicated in Table 1.
(4) Hot rolling: The heating temperature of the slab was 1180 °C, the finishing rolling temperature of the steel coil was 780 °C, and the coiling temperature was 660 °C to produce a hot-rolled plate with a thickness specification of 2.5 mm.
(5) Normalizing annealing: The holding temperature for normalizing was 980 °C and the holding time was 10 minutes.
(6) Cold rolling was performed to obtain finished products with a thickness of 0.15-0.35 mm. The steel coil of Example 3 was processed by a double cold rolling process, while other Examples and Comparative Examples were processed by a single cold rolling process.
(7) Final annealing and applying insulation coating: The holding time for annealing was 50 seconds, and the annealing temperatures for Examples and Comparative Example are listed in Table 2.

Table 1 lists the mass percentages of chemical elements in the non-oriented electrical steel sheets of Examples 1-8 and the comparative steel sheets of Comparative Examples 1-5.

**Table 1 (wt%, the balance being Fe and other inevitable impurities)**

| No. | C | Si | Mn | Al | P | S | N | Ti | Ca | REM | Other elements |
|---|---|---|---|---|---|---|---|---|---|---|---|
| Example 1 | 0.0041 | 2.65 | 1.00 | 1.5 | 0.011 | 0.0035 | 0.0025 | 0.0015 | - | - | - |
| Example 2 | 0.0023 | 2.90 | 0.55 | 1.85 | 0.018 | 0.0026 | 0.0015 | 0.0018 | - | - | Sn: 0.0035, Ni: 0.006 |
| Example 3 | 0.0012 | 3.15 | 1.04 | 0.95 | 0.009 | 0.0015 | 0.0015 | 0.0008 | - | - | Cr+Cu: 0.45 |
| Example 4 | 0.0015 | 3.28 | 0.95 | 0.65 | 0.015 | 0.0013 | 0.0021 | 0.0005 | 0.0005 | - | Ni+Co+Zr: 0.95 |
| Example 5 | 0.0015 | 3.45 | 0.85 | 0.72 | 0.012 | 0.0021 | 0.0013 | 0.0011 | 0.0060 | - | V+Nb+Mo+Cr: 1.05 |
| Example 6 | 0.0024 | 3.5 | 0.65 | 0.55 | 0.008 | 0.0016 | 0.0015 | 0.0006 | - | 0.0005 | Mo+Ni+Sb+Zr+Cu: 0.25 |
| Example 7 | 0.0025 | 3.65 | 0.35 | 0.10 | 0.014 | 0.0016 | 0.0026 | 0.0004 | 0.0008 | 0.0120 | Sn+Cu+Nb+Cr: 0.65, with Sn=0.25 |
| Example 8 | 0.0021 | 3.75 | 0.10 | 0.35 | 0.015 | 0.0005 | 0.0015 | 0.0005 | 0.0009 | 0.0050 | Cu+Mo+Sb+Ni: 0.55 |
| Comparative Example 1 | 0.002 | 3.15 | 0.20 | 0.55 | 0.018 | 0.0015 | 0.0021 | 0.0018 | 0.0015 | - | - |
| Comparative Example 2 | 0.0024 | 3.25 | 0.55 | 0.95 | 0.015 | 0.0022 | 0.0015 | 0.0009 | - | - | - |
| Comparative Example 3 | 0.0020 | 3.55 | 0.15 | 1.00 | 0.015 | 0.0015 | 0.0015 | 0.0012 | - | - | - |
| Comparative Example 4 | 0.0015 | ***2.00*** | 0.85 | ***0.01*** | 0.016 | 0.0008 | 0.0018 | 0.0015 | - | - | - |
| Comparative Example 5 | 0.0027 | ***2.25*** | 0.55 | 0.75 | 0.018 | 0.0015 | 0.0025 | 0.0005 | - | - | - |

Table 2 lists the specific process parameters in the RH refining step for the non-oriented electrical steel sheets of Examples 1-8 and the comparative steel sheets of Comparative Examples 1-5.

**Table 2**

| No. | Free oxygen content [O] (ppm) | Carbon content [C] (ppm) | [O]/[C] | Circulating gas flow rate V₀ at the end of decarburization (Nm³/h) | Circulating gas flow rate V₁ during decarburization (Nm³/h) | V₀+12[Al] | Final annealing temperature (°C) |
|---|---|---|---|---|---|---|---|
| Example 1 | 260 | 14 | 18.6 | 140 | 175 | 158 | 870 |
| Example 2 | 285 | 22 | 13.0 | 150 | 180 | 172 | 920 |
| Example 3 | 215 | 10 | 21.5 | 150 | 180 | 161 | 990 |
| Example 4 | 190 | 13 | 14.6 | 150 | 185 | 158 | 950 |
| Example 5 | 265 | 15 | 17.7 | 160 | 185 | 169 | 970 |
| Example 6 | 350 | 24 | 14.6 | 160 | 190 | 167 | 960 |
| Example 7 | 185 | 23 | 8.0 | 160 | 190 | 161 | 955 |
| Example 8 | 245 | 19 | 12.9 | 170 | 200 | 174 | 850 |
| Comparative Example 1 | 455 | 18 | ***25.3*** | 155 | 175 | 162 | 980 |
| Comparative Example 2 | 285 | 22 | 13.0 | ***130*** | 165 | 141 | 920 |
| Comparative Example 3 | 245 | 20 | 12.3 | ***180*** | ***180*** | ***192*** | 830 |
| Comparative Example 4 | 200 | 14 | 14.3 | 150 | 175 | 150 | 950 |
| Comparative Example 5 | 225 | 21 | 10.7 | 150 | 185 | 159 | 860 |

Next, samples were taken from the non-oriented electrical steel sheets of Examples 1-8 and the comparative steel sheets of Comparative Examples 1-5, and these non-oriented electrical steel sheet samples were tested. The obtained test results are listed in Table 3 below. The relevant performance testing methods are as follows:
Fatigue performance: Testing was conducted in accordance with GB-T 3075-2008 "*Metallic materials - Fatigue testing - Axial-force-controlled method*"*.* The test condition parameters were set as follows: test ambient temperature of 25 ± 5 °C and 150 ± 3 °C; sinusoidal waveform control; stress ratio R=0.1; test frequency: 50 Hz; and a conditional fatigue limit cycle count of 1.0×10⁷ cycles. The fatigue limit (fatigue strength) was calculated based on a survival rate of 50%.

Number of Al₂O₃ inclusions: Statistical analysis was performed using a field emission scanning electron microscopy. A 20×20 mm sample was randomly cut from the base steel sheet, ground to the 1/2 thickness position of the sheet, and subjected to mechanical polishing or electrochemical polishing. Photographing and observation were then carried out under backscattered electron mode to identify Al₂O₃ oxide inclusions and count their number. 20 or more consecutive fields of view were captured, the number of Al₂O₃ oxide inclusions with a size ≥ 2.0 µm was counted, and the distribution density was calculated in units of "counts/mm²".

Iron loss P_{1.0/600} (iron loss value when excited at a magnetic flux density of 1.0 T and a frequency of 600 Hz): Testing was conducted using the square ring method in accordance with the standard GB/T10129-2019 "*Methods of measurement of magnetic properties of electrical steel strip and sheet at medium frequencies*".

Average grain size: The average grain size was determined statistically using the planimetric method specified in the Chinese national standard GBT6394-2017 "*Determination of estimating the average grain size of metals*"*.* A small specimen of 15×20 mm was cut from the final annealed sheet, with the observation surface being the cross-section parallel to the rolling direction. After grinding and mechanical polishing, the observation surface was etched with a nital solution to reveal the grain boundaries. The number of grains was counted, and the average grain size was calculated.

**Table 3**

| No. | Steel sheet thickness *t* (mm) | Average grain size (µm) | Number of Al₂O₃ inclusions with a size of 2.0 µm or more (counts/mm²) | Fatigue strength S₂₅ (MPa) | Fatigue strength S₁₅₀ (MPa) | S₁₅₀/S₂₅ | P_{1.0/600} (W/kg) | 36-([Si]+1.2×[Al])/5t |
|---|---|---|---|---|---|---|---|---|
| Example 1 | 0.35 | 65 | 2 | 365 | 294 | 0.81 | 32.34 | 33.46 |
| Example 2 | 0.35 | 85 | 1 | 372 | 355 | 0.95 | 31.5 | 33.07 |
| Example 3 | 0.30 | 155 | 1 | 385 | 325 | 0.84 | 24.64 | 33.14 |
| Example 4 | 0.30 | 105 | 1 | 394 | 345 | 0.88 | 26.13 | 33.29 |
| Example 5 | 0.25 | 135 | 0.5 | 421 | 355 | 0.84 | 19.46 | 32.55 |
| Example 6 | 0.25 | 120 | 0.5 | 415 | 352 | 0.85 | 20.85 | 32.67 |
| Example 7 | 0.20 | 110 | 0.5 | 435 | 385 | 0.89 | 17.69 | 32.23 |
| Example 8 | 0.15 | 45 | 1 | 460 | 455 | 0.99 | 16.95 | 30.44 |
| Comparative Example 1 | 0.35 | ***25*** | ***5*** | ***345*** | 340 | 0.99 | 32.45 | 33.82 |
| Comparative Example 2 | 0.35 | 85 | ***7*** | ***331*** | 314 | 0.95 | 32.52 | 33.49 |
| Comparative Example 3 | 0.35 | ***40*** | ***8*** | 382 | 301 | ***0.79*** | ***35.67*** | ***33.29*** |
| Comparative Example 4 | 0.30 | 105 | 2 | ***225*** | **215** | 0.96 | ***40.54*** | ***34.66*** |
| Comparative Example 5 | 0.30 | 55 | 1 | ***235*** | **223** | 0.95 | ***38.5*** | ***33.90*** |

It can be seen from Table 3 above that in the non-oriented electrical steel sheets of Examples 1-8 of the present disclosure, the number of Al₂O₃ inclusions with a size of 2.0 µm or more does not exceed 4 counts/mm², the average grain size falls within the range of 45-165 µm, the fatigue strength S₂₅ at 25 °C (ambient temperature) is 365 MPa or more, the ratio of S₁₅₀ (the fatigue strength at 150 °C) to S₂₅ falls between 0.8-1.0, and the iron loss P_{1.0/600} is low, satisfying the following relationship: P_{1.0/600} ≤ 36-([Si]+1.2×[Al])/5t. Therefore, the non-oriented electrical steel sheets of Examples 1-8 can reduce motor energy loss and enhance motor efficiency. Concurrently, their excellent fatigue performance ensure that the motor core and rotor can operate stably at high speeds within a temperature range from room temperature to 150 °C, without deformation or fracture.

In contrast, in Comparative Example 1, the free oxygen content [O] in the molten steel at the end of decarburization was excessively high, and the ratio of free oxygen content [O] to carbon content [C] in the molten steel at the end of decarburization was higher than 21.5, resulting in difficulties in subsequent deoxidation. After the addition of aluminum ingots, a substantial amount of Al₂O₃ inclusions was generated, resulting in the density of large-sized Al₂O₃ oxide particles remaining in the final product reaching 5 counts/mm², and the fatigue performance at 25 °C was below 365 MPa.

In Comparative Examples 2 and 3, the circulating gas flow rate V₀ at the end of decarburization in the RH refining process and the circulating gas flow rate V₁ after adding aluminum ingots for the steel grades failed to meet the requirements of the present disclosure, resulting in insufficient flotation and removal of large-sized Al₂O₃ generated during the aluminum deoxidation process, thereby leading to high impurity density and poor fatigue performance of the finished sheet. Moreover, the average grain size of Comparative Example 3 was less than 45 µm, leading to further deterioration of iron loss performance.

In Comparative Examples 4 and 5, the content of Si or Al in chemical compositions of the steels was too low, resulting in lower fatigue strength and higher iron loss P_{1.0/600}, which failed to achieve the desired performance.

All publications, patent applications, patents, and other references mentioned in the present disclosure are incorporated herein by reference in their entirety.

Although the present disclosure has been illustrated and described with reference to certain preferred embodiments, it should be understood by those skilled in the art that the foregoing description is provided in conjunction with specific embodiments to further elaborate the present disclosure, and it should not be construed as the specific embodiment of the present disclosure being limited to these explanations. Various changes in form and detail may be made by those skilled in the art, including making several simple deductions or substitutions, without departing from the spirit and scope of the present disclosure.

## Claims

1. A non-oriented electrical steel sheet, wherein in addition to Fe and inevitable impurities, the non-oriented electrical steel sheet further comprises the following chemical elements in mass percentage:
0<C≤0.0045%, Si: 2.65-3.75%, Mn: 0.10-1.04%, Al: 0.10-1.85%;
wherein the number ofAl₂O₃ inclusions with a size of 2.0 µm or more in the non-oriented electrical steel sheet is not more than 4 counts/mm², preferably not more than 2 counts/mm².

2. The non-oriented electrical steel sheet according to claim 1, wherein the non-oriented electrical steel sheet comprises the following chemical elements in mass percentage:
0<C≤0.0045%, Si: 2.65-3.75%, Mn: 0.10-1.04%, Al: 0.10-1.85%; the balance being Fe and inevitable impurities.

3. The non-oriented electrical steel sheet according to claim 1 or 2, wherein the non-oriented electrical steel sheet further comprises Ca and/or REM, and wherein in mass percentage, Ca: 0.0005-0.0060%, and/or REM: 0.0005-0.0120%.

4. The non-oriented electrical steel sheet according to any one of claims 1 to 3, wherein the non-oriented electrical steel sheet further comprises at least one of Nb, V, Cu, Mo, Ni, Co, Cr, Sn, Sb and Zr in a total amount of 0.0095-1.05% by mass.

5. The non-oriented electrical steel sheet according to claim 4, wherein the non-oriented electrical steel sheet further comprises Sn, and wherein in mass percentage, Sn: 0.0035-0.25%.

6. The non-oriented electrical steel sheet according to any one of claims 1 to 5, wherein the inevitable impurities include P, S, N and Ti, and wherein in mass percentage, P≤0.02%, S≤0.0055%, N≤0.0035%, and Ti≤0.0025%.

7. The non-oriented electrical steel sheet according to any one of claims 1 to 6, wherein the non-oriented electrical steel sheet has a thickness of 0.15-0.35 mm.

8. The non-oriented electrical steel sheet according to any one of claims 1 to 7, wherein the non-oriented electrical steel sheet has an average grain size of 45-165 µm.

9. The non-oriented electrical steel sheet according to any one of claims 1 to 8, wherein the non-oriented electrical steel sheet has an iron loss P_{1.0/600} of ≤ 36-([Si]+1.2×[Al])/5t, where t represents the thickness of the steel sheet in mm, and [Si] and [Al] are substituted with the numerical values preceding the % symbol of the mass percentage of Si and Al in the steel sheet, respectively.

10. The non-oriented electrical steel sheet according to any one of claims 1 to 9, wherein the non-oriented electrical steel sheet has a fatigue strength S₂₅ at 25 °C of ≥ 365 MPa and a fatigue strength S₁₅₀ at 150 °C of ≥ 294 MPa, and preferably, the ratio of S₁₅₀ to S₂₅, S₁₅₀/S₂₅, satisfies 0.80 ≤ S₁₅₀/S₂₅ ≤ 1.0.

11. A method for manufacturing the non-oriented electrical steel sheet according to any one of claims 1 to 10, comprising the following steps performed in sequence: smelting, RH refining, casting, hot rolling, normalizing annealing, cold rolling, final annealing, and applying insulation coating, wherein in the RH refining step:
a circulating gas flow rate V₁ during decarburization and a circulating gas flow rate V₀ at the end of decarburization satisfy the following relationships: V₁ ≥ V₀+12[Al], where [Al] represents the content of Al in molten steel (substituted with the numerical value preceding the % symbol of the mass percentage of element Al in the molten steel), and V₀ ≥ 140 Nm³/h; and
after decarbonization, the ratio of free oxygen content [O] to carbon content [C], [O]/[C], in the molten steel is set to 21.5 or less.

12. The method according to claim 11, wherein the cold rolling is carried out by a single cold rolling process or a double cold rolling process.

13. The method according to claim 11 or 12, wherein the final annealing is performed at a temperature of 830-990 °C.
